# EUROPÄISCHE PATENTSCHRIFT

(11) **EP 2 503 203 B1**
(45) Veröffentlichungstag und Bekanntmachung des Hinweises auf die Patenterteilung: **18.12.2013**
(21) Anmeldenummer: 11159026.1
(22) Anmeldetag: 21.03.2011
(51) Int. Cl.: F16L 5/14

(54) **Armaturenanschluss**
Fitting connection
Raccordement d'armature

(43) Veröffentlichungstag der Anmeldung: 26.09.2012
(73) Patentinhaber: Geberit International AG, 8645 Jona (CH)
(72) Erfinder: Heimgartner, Ernst, 8645 Jona (CH); Wili, Hansruedi, 8645 Jona (CH)
(74) Vertreter: Frischknecht, Harry Ralph

(56) Entgegenhaltungen:
- EP-A1- 0 275 113
- EP-A1- 1 484 544
- DE-C1- 3 935 731
- DE-U1- 29 924 372

## Beschreibung

### TECHNISCHES GEBIET

Die vorliegende Erfindung betrifft eine Sanitäranordnung mit mindestens einem Armaturenanschluss nach dem Oberbegriff von Anspruch 1, sowie ein Verfahren zu Montage einer derartigen Sanitäranordnung.

### STAND DER TECHNIK

Bei der Installation einer Leitungsdurchführung oder eines Armaturenanschlusses wird der Anschlussfitting in einen Durchbruch oder eine Öffnung in der Wand eingesetzt und gegen Verdrehen gesichert. Am ersten Ende wird eine Leitung und am anderen Ende eine Sanitärannatur angeschlossen. Die Wand, durch welche die Sanitärleitung hindurchzuführen ist, kann beispielsweise eine Anschlussplatte sein, die an einem Montagegestell zu befestigen ist. Die Platzverhältnisse hinter der Wand bzw. der Anschlussplatte sind häufig sehr eng und schlecht zugänglich, was die Montage, insbesondere die Ausrichtung eines solchen Armaturenanschlusses erschwert.

Eine Leitungsdurchführung ist beispielsweise aus der EP 1 484 544 bekannt. Obwohl mit der technischen Lehre nach der EP 1 484 544 sehr gute Resultate bezüglich der Montage bei engen Platzverhältnissen erzielt worden sind, besteht ein Bedürfnis, die Montage weiter zu vereinfachen, insbesondere eine einfache Ausrichtung der Armaturenanschlüsse zu gewährleisten.

Aus der DE 39 35 731 ist eine Rosette bekannt geworden, welche zu einer anderen Rosette zum Zweck der Abstandseinstellung verschwenkbar ist.

### DARSTELLUNG DER ERFINDUNG

Ausgehend von diesem Stand der Technik liegt der Erfindung eine Aufgabe zugrunde, eine Leitungsdurchführung anzugeben, welche die Nachteile des Standes der Technik überwindet. Insbesondere soll eine Sanitäranordnung angegeben werden, welche eine einfachere Positionierung bzw. Ausrichtung von zwei benachbart zueinander angeordneten Armaturenanschlüssen relativ zueinander erlaubt.

Diese Aufgabe wird durch eine Sanitäranordnung nach Anspruch 1 gelöst. Demgemäss umfasst eine Sanitäranordnung mindestens zwei benachbart zueinander angeordnete Armaturenanschlüsse für die Installation von durch Wände hindurchführenden Sanitärleitungen. Der Armaturenanschluss umfasst einen rohrförmigen Anschlussfitting mit einer einen Durchgang begrenzenden Seitenwand und eine Befestigungsplatte, die eine Außenkontur und eine Aufnahmeöffnung aufweist, in welcher der Anschlussfitting in der Befestigungsplatte gelagert ist. Die Außenkontur umfasst mindestens zwei Kontaktabschnitte, wobei die Aufnahmeöffnung bezüglich diesen zwei Kontaktabschnitten exzentrisch angeordnet ist, so dass die Distanz vom Anschlussfitting zu einem Kontaktabschnitt von der Distanz vom Anschlussfitting zu einem anderen Kontaktabschnitt unterschiedlich ist, und dass die mindestens zwei Armaturenanschlüsse über diese mindestens zwei Kontaktabschnitte miteinander in Kontakt stehen, so dass der Achsabstand der Anschlussfittings durch alternatives Anordnen der Befestigungsplatten einstellbar ist. Die Distanz wird vorzugsweise parallel zur Oberfläche der Befestigungsplatte gesehen.

Die Kontaktabschnitte weisen die Gestalt von Verriegelungselementen auf, mit welchen benachbart zueinander angeordnete Befestigungsplatten verbindbar sind.

Mit einer solchen Sanitäranordnung können die beiden Armaturenanschlüsse über die Kontaktabschnitte einfach und sicher zueinander ausgerichtet werden.

Vorzugsweise weist der Kontaktabschnitt die Gestalt von Seitenkanten auf, wobei die Distanz vom Anschlussfitting zu einer Seitenkante unterschiedlich von der Distanz vom Anschlussfitting zu einer anderen Seitenkante ist. Die beiden Armaturenanschlüsse stehen dann über die Seitenkanten miteinander in Kontakt.

Besonders bevorzugt weist mindestens einer der Kontaktabschnitte die Gestalt von Seitenkanten auf und mindestens ein anderer der Kontaktabschnitte weist die Gestalt von Verriegelungselementen auf, wobei die Distanz vom Anschlussfitting zur Seitenkante unterschiedlich von der Distanz vom Anschlussfitting zum Verriegelungselement ist.

Vorzugsweise verfügt der Kontaktabschnitt in der Gestalt der Seitenkanten über mindestens ein Einrastelement, mit welchen zwei benachbarte Armaturenanschlüsse verbindbar sind.

Vorzugsweise sind die Einrastelemente und/oder die Verriegelungselemente codiert angeordnet, so dass nur definierte Konfigurationen der Anordnung der Armaturenanschlüsse zueinander zugelassen sind.

Bevorzugterweise weist die Aussenkontur mindestens eine Ausnehmung mit einer konkaven Gestalt auf, so dass zwischen zwei benachbarten Befestigungsplatten eine gemeinsame konkave Ausnehmung entsteht, durch welche eine weitere Armatur, wie beispielsweise ein Abgangsbogen eines Siphons, durch die Sanitäranordnung hindurchführbar ist.

Ein Verfahren zur Montage einer Sanitäranordnung nach obiger Beschreibung umfasst die Schritte:
- der Platzierung von mindestens zwei Armaturenanschlüsse derart in einer Öffnung in einer Wand, dass der Anschlussfitting durch die Wand hindurchragt und von der ersten Oberfläche der Wand hervorsteht, und wobei die Befestigungsplatte zur zweiten Oberfläche der Wand gerichtet ist,
- der Verbindung und/oder Kontaktierung von mindestens zwei Armaturenanschlüsse miteinander über die Kontaktabschnitte,
- der Verbindung eines Montagebolzen mit dem mindestens einen Anschlussfitting, so dass eine Kraft in Richtung der Mittelachse vom Montagebolzen auf den Anschlussfitting übertragbar ist, wobei der Montagebolzen von der Öffnung her gesehen über die erste Oberfläche der Wand hervorsteht,
- der Verbindung einer Montagehülse mit dem Montagebolzen, wobei über die Montagehülse und den Montagebolzen die Befestigungsplatte in Richtung der zweiten Oberfläche der Wand bewegt wird,
- der Ausrichtung von mindestens zwei nebeneinander angeordneten bzw. miteinander verbundenen Armaturenanschlüsse vor und/oder nach und/oder während der Betätigung der Montagehülse, und
- der Eindrehung mindestens einer Schraube von der ersten Oberfläche der Wand durch die Wand in die Befestigungsplatte, wobei durch diese Schraube der Armaturenanschluss zur Wand geklemmt wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Draufsicht auf eine Anordnung mit zwei Leitungsdurchführung mit jeweils einer Befestigungsplatte;
- Fig. 2: einen Schnitt durch die Anordnung nach Figur 1 entlang der Schnittlinie D-D;
- Fig. 3: einen Schnitt durch die Anordnung nach Figur 1 entlang der Schnittlinie A-A in Figur 2;
- Fig. 4: eine erste mögliche Art der Anordnung der Befestigungsplatten nach Figur 1;
- Fig. 5: eine zweite mögliche Art der Anordnung der Befestigungsplatten nach Figur 1; und
- Fig. 6: eine dritte mögliche Art der Anordnung der Befestigungsplatten nach Figur 1.

### BESCHREIBUNG BEVORZUGTER AUSFÜHRUNGSFORMEN

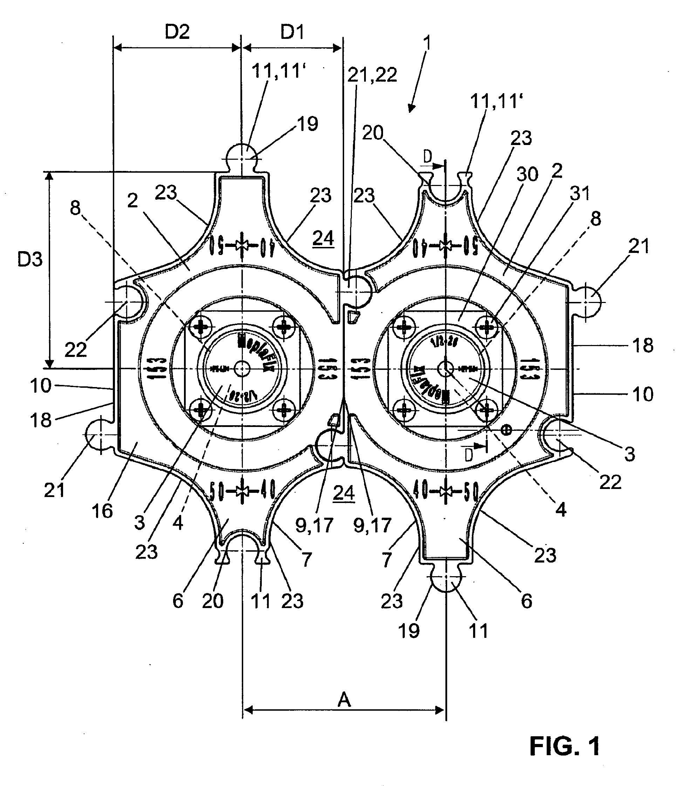

In der Figur 1 wird eine Sanitäranordnung 1 mit zwei benachbart zueinander angeordneten Armaturenanschlüssen 2 gezeigt. Die Armaturenanschlüsse 2 dienen der Installation von durch Wände hindurchführenden Sanitärleitungen.

Der Armaturenanschluss 2 umfasst einen rohrförmigen Anschlussfitting 3 mit einer einen Durchgang 4 begrenzenden Seitenwand 5, und eine Befestigungsplatte 6, die eine Außenkontur 7 und eine Aufnahmeöffnung 8, in welcher der Anschlussfitting 3 in der Befestigungsplatte 6 gelagert ist.

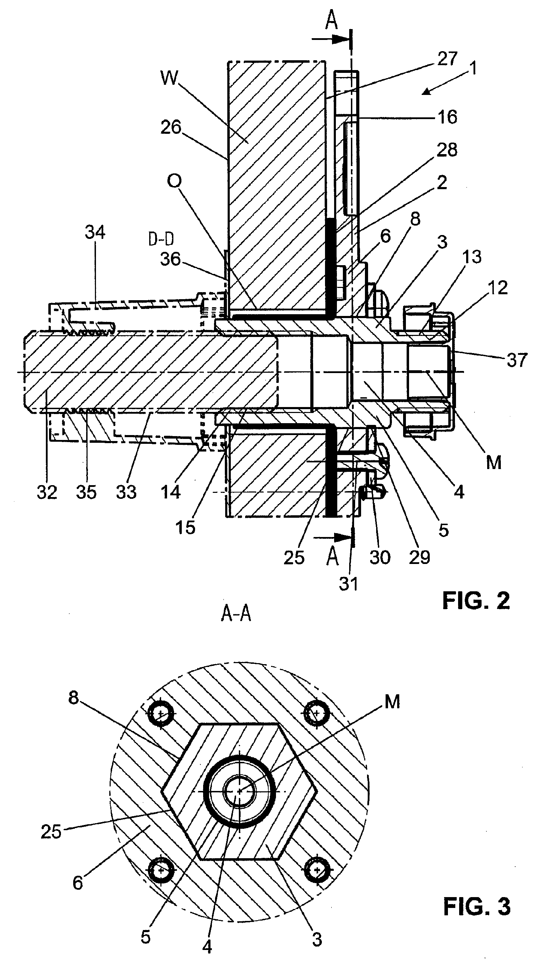

Der Anschlussfitting 3 dient der Verbindung von zwei Leitungsabschnitten, wobei der Durchgang 4 durch ein Fluid, wie Wasser, durchströmbar ist. In der Figur 2 kann gut erkannt werden, dass der Anschlussfitting 3 eine erste Anschlussseite 12, hier mit einem Außengewinde 13, und eine zweite Anschlussseite 14, hier mit einem Innengewinde 15, umfasst. Über diese Anschlussseiten 12, 14 kann der Anschlussfitting mit den Leitungsabschnitten verbunden werden. Der Anschlussfitting 3 ragt durch eine Öffnung O in einer Wand W. Die Wand W weist eine erste Oberfläche 26 und eine zweite Oberfläche 27 auf. Die Befestigungsplatte 6 liegt hier an der zweiten Oberfläche 27 an und der Anschlussfitting erstreckt sich durch die Öffnung O und ragt von der Öffnung O gesehen über die erste Oberfläche 26. In dieser Ausführungsform ist zwischen der zweiten Oberfläche 27 und der Befestigungsplatte 6 eine optionale Schalldämmunterlage 28 angeordnet, welche sich zudem in die Öffnung O erstrecken kann.

Der Anschlussfitting 3 ist fest mit der Befestigungsplatte 6 verbunden, so dass keine relative Bewegung zwischen Anschlussfitting 3 und Befestigungsplatte 6 möglich ist.

Der Anschlussfitting 3 ist drehfest in der Befestigungsplatte 6 gelagert, wobei vorzugsweise der Anschlussfitting 3 eine Mehrkant-Außenkontur 25 und die Aufnahmeöffnung 8 mindestens abschnittsweise eine zu dieser Mehrkant-Außenkontur 25 korrespondierende Form aufweist. Dies kann man gut in der Figur 3 erkennen, welche eine Schnittdarstellung entlang der Linie A-A in der Figur 2 zeigt.

Bezüglich der axialen Sicherung weist der Anschlussfitting 3 eine Nut oder einen Einstich 29 auf. In diesen Einstich 29 ragt eine Halteplatte 30, welche über Schrauben 31 mit der Befestigungsplatte 6 gesichert ist. Die Schrauben ragen durch die Halteplatte 30 hindurch und stehen mit der Befestigungsplatte 6 im Eingriff, wobei so die Halteplatte 30 zur Befestigungsplatte 6 geklemmt wird. In der vorliegenden Ausführungsform sind vier Schrauben 31 vorgesehen.

Die Außenkontur 7 umfasst mindestens zwei Kontaktabschnitte, hier einen ersten Kontaktabschnitt 9, einen zweiten Kontaktabschnitt 10 und einen dritten Kontaktabschnitt 11. In der vorliegenden Ausführungsform sind zwei dritte Kontaktabschnitte 11 bezüglich des Anschlussfittings 3 gegenüber einander angeordnet. Diese beiden dritten Kontaktabschnitte 11 sind mit gleichen Merkmalen bezüglich der Distanz vom Anschlussfitting 3 ausgestattet. Alternativ kann die Distanz auch unterschiedlich sein, wobei dann vier Kontaktabschnitte 9, 10, 11 und 11' vorhanden wären. Über die Kontaktabschnitte 9, 10, 11 lassen sich benachbarte zueinander anzuordnende Armaturenanschlüsse 2 miteinander verbinden.

Die Aufnahmeöffnung 8 ist bezüglich diesen mindestens zwei Kontaktabschnitten 9, 10, 11 exzentrisch angeordnet, so dass der Anschlussfitting 3 ebenfalls exzentrisch zu den Kontaktabschnitten zu liegen kommt, wobei zwischen Anschlussfitting 3 und den verschiedenen Kontaktabschnitten 9, 10, 11 unterschiedliche Abstände bzw. Distanzen D1, D2, D3 bereitgestellt werden. Die Distanz definiert sich parallel zur Oberfläche 16 der Befestigungsplatte 6 bzw. senkrecht zur Mittelachse M des Anschlussfittings 3 von der Mittelachse M des Anschlussfittings 3 bis hin zur Außenkontur 7 der Befestigungsplatte 6. Aufgrund der exzentrischen Anordnung der Aufnahmeöffnung 8 bzw. des Anschlussfittings 3 zu den Kontaktabschnitte 9, 10, 11 kann der Installateur die beiden benachbarten Armaturenanschlüsse bedarfsgerecht zueinander ausrichten und kann somit den Achsabstand A zwischen den beiden Anschlussfittings 3 an die anzuschliessende Sanitärarmatur oder an andere Elemente anpassen. Der Abstand A der Anschlussfittings 2 lässt sich also durch alternatives Anordnen der Befestigungsplatten 6 einstellen.

Die Distanz D1 vom Anschlussfitting 3 zum ersten Kontaktabschnitt 9 ist unterschiedlich von der Distanz D2 vom Anschlussfitting 3 zum zweiten Kontaktabschnitt 10 und von der Distanz D3 vom Anschlussfitting 3 zum dritten Kontaktabschnitt 11. Die Distanz D2 ist zudem unterschiedlich zur Distanz D3. Folglich sind alle drei Distanzen D1, D2, D3 unterschiedlich zueinander.

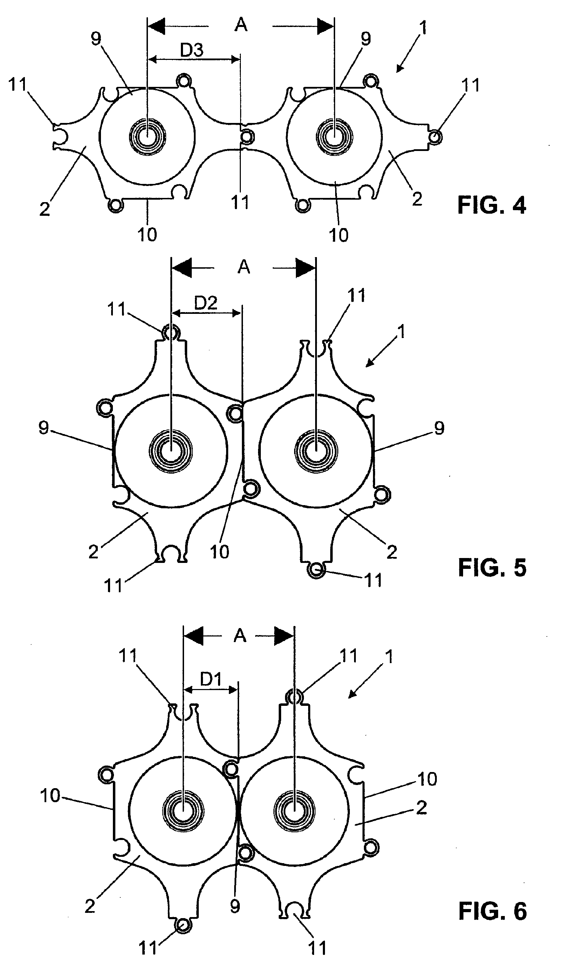

In den Figuren 4 bis 6 werden beispielhafte Kombinationen gezeigt, wobei die Armaturenanschlüsse 2 jeweils unterschiedlich zueinander angeordnet sind. In den beispielhaft gezeigten Kombinationen steht der eine Kontaktabschnitt 9, 10, 11 des einen Armaturenanschlusses 2 mit dem entsprechenden anderen Kontaktabschnitt 9, 10, 11 des anderen Armaturenanschlusses 2 in Verbindung. Der erste Kontaktabschnitt 9 des einen Armaturenanschlusses steht folglich mit dem ersten Kontaktabschnitt 9 des anderen Armaturenanschlusses in Verbindung. Der zweite Kontaktabschnitt 10 steht dann mit dem jeweiligen zweiten Kontaktabschnitt 10 und der dritte Kontaktabschnitt 11 mit dem jeweiligen dritten Kontaktabschnitt 11. So lassen sich drei verschiedene Abstände bereitstellen, wobei die oben genannte Distanz D1, D2, D3 jeweils der Hälfte des Abstandes A entspricht. Diese Anordnung hat den Vorteil, dass genormte bzw. vordefinierte Abstände bereitstellbar sind.

Alternativ ist auch denkbar, dass die Kontaktabschnitte 9, 10, 11 untereinander vertauscht werden, so dass also der erste mit dem zweiten oder dem dritten verbunden wird.

In der Figur 4 stehen die beiden Armaturenanschlüsse 2 über den dritten Kontaktabschnitt 11 miteinander in Verbindung. Die Distanz D3 entspricht hier also dem halben Abstand zwischen den beiden Anschlussfittings 3. Vorzugsweise entspricht der Abstand hier 153 mm, was dann einer Distanz D3 von 76.5 mm entspricht. Andere Abstände als der eben genannte und die folgend genannten sind selbstverständlich auch denkbar.

In der Figur 5 stehen die beiden Armaturenanschlüsse 2 über den zweiten Kontaktabschnitt 10 miteinander in Verbindung. Die Distanz D2 entspricht hier also dem halben Abstand zwischen den beiden Anschlussfittings 3. Vorzugsweise entspricht der Abstand hier 100 mm, was dann einer Distanz D2 von 50 mm entspricht.

In der Figur 6 stehen die beiden Armaturenanschlüsse 2 über den ersten Kontaktabschnitt 9 miteinander in Verbindung. Die Distanz D1 entspricht hier also dem halben Abstand zwischen den beiden Anschlussfittings 3. Vorzugsweise entspricht der Abstand hier 80 mm, was dann einer Distanz D1 von 40 mm entspricht.

Mit Hilfe der Figur 1 werden nun weitere Merkmale der Sanitäranordnung erläutert. Wie von der Figur 1 erkennt werden kann, sind die Kontaktabschnitte 9, 10, 11 in dieser Ausführungsform unterschiedlich voneinander ausgebildet.

Einerseits weisen die Kontaktabschnitte 9, 10 die Gestalt von Seitenkanten 17, 18 auf, wobei die Distanz D1 vom Anschlussfitting 3 zu einer Seitenkante 17 unterschiedlich von der Distanz D2 vom Anschlussfitting 3 zu einer anderen Seitenkante 18 ist. Die beiden Armaturenanschlüsse 2 sind dann über die Seitenkanten 17 bzw. 18 miteinander in Kontakt. Der Installateur kann die Armaturenanschlüsse 2 über die Seitenkanten 17 bzw. 18 zueinander positionieren. Dabei kommen die Armaturenanschlüsse 2 über die Seitenkanten 17, 18 aneinander zu liegen.

Andererseits können die Kontaktabschnitte, wie hier der Kontaktabschnitt 11, die Gestalt von Verriegelungselementen 19, 20 aufweisen, mit welchen benachbart liegende Befestigungsplatten 6 verbindbar sind. Das Verriegelungselement 19, 20 verfügt über einen Zapfen 19 und eine Öffnung 20, wobei der Zapfen 19 in die Öffnung 20 eingereift. Der Zapfen 19 ist dabei derart ausgebildet, dass dieser von der Befestigungsplatte 6 hervorsteht. Die Öffnung 20 ihrerseits ist in einem Bereich in der Befestigungsplatte 6 angeordnet.

Die als Seitenkanten 17, 18 ausgebildeten Kontaktabschnitte 9, 10 können zudem über ein Einrastelement 21, 22 verfügen, mit welchem benachbart liegende Befestigungsplatten 6 verbindbar sind. Wenn diese Einrastelemente 21, 22 vorhanden sind, sind benachbart liegende Befestigungsplatten 6 über die Einrastelemente 21, 22 und/oder die Seitenkanten 17, 18 miteinander verbindbar.

Das Einrastelement 21, 22 verfügt über einen Zapfen 21 und eine Öffnung 22, in die der Zapfen 21 eingereift. Der Zapfen 21 ist dabei derart ausgebildet, dass dieser von der Befestigungsplatte 6 über die Seitenkante 17, 18 hervorsteht und die Öffnung 22 ist von der Seitenkante 17, 18 in die Befestigungsplatte 6 hinein versetzt.

In der vorliegenden bevorzugten Ausführungsform sind pro Seitenkante 17, 18 zwei Einrastelemente 21, 22 angeordnet, wobei besonders bevorzugt Zapfen 21 und Öffnungen 22 alternierend angeordnet sind, so dass pro Seitenkante 17, 18 ein Zapfen 21 und eine Öffnung 22 angeordnet.

Vorzugsweise sind die Einrastelemente 21, 22 zudem codiert angeordnet. Beispielsweise durch eine Variierung der Abstände zwischen den Einrastelementen 21, 22 auf der einen Seitenkante 17 und derjenigen der anderen Seitenkante 18. Alternativ kann eine Codierung auch durch die Wahl von unterschiedlicher Grösse und/oder Form der Zapfen 21 und Öffnungen 22 erzielt werden. Die codierte Anordnung hat den Vorteil, dass der Zusammenbau der Armaturenanschlüsse 2 nur auf eine vordefinierte Art und Weise erfolgen kann.

Auch die Verriegelungselemente 19, 20 können codiert angeordnet sein, so dass der eine dritte Kontaktabschnitt 11 nicht mit dem anderen dritten Kontaktabschnitt 11 verbindbar ist.

Die Außenkontur 7 weist vorzugsweise mindestens eine Ausnehmung 23 mit einer konkaven Gestalt auf. Hier sind pro Befestigungsplatte 6 vier an den Ecken der Befestigungsplatte 6 angeordnete Ausnehmungen 23 vorhanden. Zwischen zwei benachbart zueinander angeordnete Befestigungsplatten 6 entsteht aus zwei konkave Ausnehmungen 23 eine gemeinsame Ausnehmung 24. Durch diese Ausnehmung 24 kann eine weitere Armatur, wie beispielsweise ein Abgangsbogen eines Siphons, durch die Sanitäranordnung hindurchgeführt werden.

Unter Bezugnahme auf die Figur 2 wird nun die Montage der erfindungsgemässen Sanitäranordnung erläutert. In diesem Zusammenhang sei erwähnt, dass die Oberfläche 26 der Wand W die Oberfläche ist, zu welcher dann auch eine entsprechende Armatur befestigt wird, weshalb die Oberfläche 26 die Vorderseite darstellt. Die Oberfläche 27 stellt dabei die Hinterseite dar.

In einem ersten Schritt werden mindestens zwei Armaturenanschlüsse 2, vorzugsweise genau zwei Armaturenanschlüsse 2, derart in der Öffnung O platziert, dass der Anschlussfitting 3 durch die Wand W hindurchragt und von der ersten Oberfläche 26 über die Wand W hervorsteht. Die Befestigungsplatte 6 kommt in den Bereich der zweiten Oberfläche 27 zu liegen, wobei die Befestigungsplatte 6 entweder direkt auf der Oberfläche 27 anliegt oder über die Schalldämmunterlage 28 mit der Wand W in Kontakt steht.

Anschliessend werden die mindestens zwei Armaturenanschlüsse über die jeweiligen Kontaktabschnitte 9, 10, 11 miteinander verbunden.

Weiter wird dann ein Montagebolzen 32 mit dem Anschlussfitting 3 verbunden, so dass ein Kraft F in Richtung der Mittelachse M vom Montagebolzen 32 auf den Anschlussfitting 3 übertragbar ist. Vorzugsweise erfolgt die Verbindung über ein Aussengewinde 33 am Montagebolzen 32 und das Innengewinde 15 des Anschlussfittings 3. Der Montagebolzen 32 steht dabei über die erste Oberfläche 26 der Wand W hervor.

Weiter wird dann eine Montagehülse 34 mit dem Montagebolzen verbunden, wobei über die Montagehülse 34 und den Montagebolzen 32 die Befestigungsplatte 6 in Richtung der zweiten Oberfläche 27 der Wand W bewegt wird. Die Montagehülse 34 steht vorzugsweise über ein Gewinde 35 mit dem Außengewinde 33 in Verbindung, so dass bei einer Verdrehung der Montagehülse 34, welche sich an der Wand W abstützt, die Befestigungsplatte 6 gegen die zweite Oberfläche 27 herangezogen wird.

Weiter folgt nun ein Schritt der Ausrichtung der mindestens zwei Armaturenanschlüsse 2 zueinander. Dieser Schritt erfolgt vorzugsweise während der Betätigung der Montagehülse 34 in iterativen Schritten zwischen Ausrichtung der Armaturenanschlüsse 2 und Verdrehen der Montagehülse 34.

Weiter wird dann nach erfolgter Ausrichtung eine Schraube von der ersten Oberfläche 26 durch die Wand in die Befestigungsplatte 6 hineingedreht, wobei durch diese Schraube der Armaturenanschluss zur Wand geklemmt wird.

Anschließend können Montagehülse 34 und Montagebolzen 32 wieder vom Anschlussfitting 3 getrennt werden.

Optional kann vor dem Einsatz der Montagehülse 34 zudem noch eine Bohrlehre 36 auf den Montagebolzen 32 aufgesetzt werden. Die Bohrlehre 36 zeigt dem Installateur an, wo die Schraube für die Fixierung der Befestigungsplatte 6 zu setzen sind. Die Bohrlehre 36 wird durch die Montagehülse 34 an die Wand W geklemmt.

Wie in der Figur 2 ebenfalls gut erkannt werden kann, kann der Anschlussfitting zudem mit einer Schutzkappe 37 versehen sein.

Zusammenfassend kann festgehalten werden, dass mit der erfindungsgemässen Sanitäranordnung 1 die mindestens zwei Armaturenanschlüsse aufgrund des Kontaktes über die Kontaktabschnitte besonders einfach zueinander ausrichtbar sind, wobei insbesondere der Achsabstand zwischen den Anschlussfittings einfach einstellbar ist.

### BEZUGSZEICHENLISTE

- 1: Sanitäranordnung
- 2: Armaturenanschluss
- 3: Anschlussfitting
- 4: Durchgang
- 5: Seitenwand
- 6: Befestigungsplatte
- 7: Außenkontur
- 8: Aufnahmeöffnung
- 9: erster Kontaktabschnitt
- 10: zweiter Kontaktabschnitt
- 11: dritter Kontaktabschnitt
- 12: erste Anschlussseite
- 13: zweite Anschlussseite
- 14: Außengewinde
- 15: Innengewinde
- 16: Oberfläche
- 17: Seitenkante
- 18: Seitenkante
- 19: Verriegelungselement, Zapfen
- 20: Verriegelungselement, Öffnung
- 21: Einrastelement, Zapfen
- 22: Einrastelement, Öffnung
- 23: Ausnehmung
- 24: konkave Ausnehmung
- 25: Mehrkant-Außenkontur
- 26: erste Oberfläche
- 27: zweite Oberfläche
- 28: Schalldämmunterlage
- 29: Nut/Einstich
- 30: Halteplatte
- 31: Schrauben
- 32: Montagebolzen
- 33: Außengewinde
- 34: Montagehülse
- 35: Gewinde
- 36: Bohrlehre
- A: Abstand Anschlussfittings
- D 1: Distanz 1
- D2: Distanz 2
- D3: Distanz 3
- W: Wand
- O: Öffnung

## Patentansprüche

1. Sanitäranordnung (1) umfassend mindestens zwei benachbart zueinander angeordnete Armaturenanschlüsse (2) für die Installation von durch Wände hindurchführenden Sanitärleitungen, wobei
der Armaturenanschluss (2) einen rohrförmigen Anschlussfitting (3) mit einer einen Durchgang (4) begrenzenden Seitenwand (5), und eine Befestigungsplatte (6), die eine Außenkontur (7) und eine Aufnahmeöffnung (8) aufweist, in welcher der Anschlussfitting (3) in der Befestigungsplatte (6) gelagert ist, umfasst, wobei
die Außenkontur (7) mindestens zwei Kontaktabschnitte (9, 10, 11) umfasst, wobei die Aufnahmeöffnung (8) bezüglich diesen zwei Kontaktabschnitten (9, 10, 11) exzentrisch angeordnet ist, so dass die Distanz (D1, D2, D3) vom Anschlussfitting (3) zu einem Kontaktabschnitt (9) von der Distanz vom Anschlussfitting (3) zu einem anderen Kontaktabschnitt (10, 11) unterschiedlich ist, **dadurch gekennzeichnet,**
**dass** die mindestens zwei Armaturenanschlüsse (2) über die Kontaktabschnitte (9, 10, 11) miteinander in Kontakt stehen, so dass der Achsabstand (A) der Anschlussfittings (2) durch alternatives Anordnen der Befestigungsplatten (6) einstellbar ist, und
**dass** die Kontaktabschnitte (9, 10, 11) die Gestalt von Verriegelungselementen (19, 20) aufweisen, mit welchen benachbart zueinander angeordnete Befestigungsplatten (6) verbindbar sind.

2. Sanitäranordnung nach Anspruch 1, **dadurch gekennzeichnet, dass** der Kontaktabschnitt (9, 10, 11) die Gestalt von Seitenkanten (17, 18) aufweist, wobei die Distanz (D1) vom Anschlussfitting (3) zu einer Seitenkante (17) unterschiedlich von der Distanz (D2) vom Anschlussfitting (3) zu einer anderen Seitenkante (18) ist.

3. Sanitäranordnung nach einem der vorhergehenden Ansprüche, **dadurch gekennzeichnet, dass** mindestens einer der Kontaktabschnitte (9, 10) die Gestalt von Seitenkanten (17, 18) aufweist, und dass mindestens ein anderer der Kontaktabschnitte (11) die Gestalt von einem Verriegelungselement aufweist, wobei die Distanz (D1) vom Anschlussfitting (3) zur Seitenkante (17, 18) unterschiedlich von der Distanz (D3) vom Anschlussfitting (3) zum Verriegelungselement (19, 20) ist.

4. Sanitäranordnung nach einem der vorhergehenden Ansprüche, **dadurch gekennzeichnet, dass** der Kontaktabschnitt (9, 10) in der Gestalt der Seitenkanten (17, 18), über mindestens ein Einrastelement (21, 22) verfügt.

5. Sanitäranordnung nach Anspruch 3 oder 4, **dadurch gekennzeichnet, dass** das Verriegelungselement (19, 20) über einen Zapfen (19) und eine Öffnung (21) verfügt, wobei der Zapfen (21) in die Öffnung (22) eingreift, und/oder dass das Einrastelement (21, 22) über einen Zapfen (21) und eine Öffnung (22) verfügt, wobei der Zapfen (21) in die Öffnung (22) eingreift.

6. Sanitäranordnung nach Anspruch 6, **dadurch gekennzeichnet, dass** der Zapfen (19, 21) von der Seitenkante (17, 18) bezüglich der Befestigungsplatte (6) hervorsteht, und dass die Öffnung (20, 22) in der Befestigungsplatte (6) angeordnet ist.

7. Sanitäranordnung nach einem der Ansprüche 3 bis 6, **dadurch gekennzeichnet, dass** die Einrastelemente (21, 22) und/oder die Verriegelungselemente (19, 10) codiert angeordnet sind.

8. Sanitäranordnung nach einem der vorhergehenden Ansprüche, **dadurch gekennzeichnet, dass** die Außenkontur (7) mindestens eine Ausnehmung (23) mit einer konkaven Gestalt aufweist, so dass zwischen zwei benachbarten Befestigungsplatten (6) eine gemeinsame konkave Ausnehmung (24) entsteht, durch welche eine weitere Armatur, wie beispielsweise ein Abgangsbogen eines Siphons, durch die Sanitäranordnung (1) hindurchführbar ist.

9. Sanitäranordnung nach einem der vorhergehenden Ansprüche, **dadurch gekennzeichnet, dass** der Anschlussfitting (3) drehfest in der Befestigungsplatte (6) gelagert ist, wobei vorzugsweise der Anschlußfitting (3) eine Mehrkant-Außenkontur und die Aufnahmeöffnung (8) eine zu dieser Mehrkant-Außenkontur korrespondierende Form aufweist.

10. Sanitäranordnung nach einem der vorhergehenden Ansprüche, **dadurch gekennzeichnet, dass** der Anschlussfitting (3) bezüglich einer Verschiebung entlang seiner Mittelachse (M) fest in der Befestigungsplatte (6) gelagert ist, wobei der Anschlussfitting (3) vorzugsweise einen Einstich (29) aufweist, in welchen eine Halteplatte (30), die mit der Befestigungsplatte (6) in Verbindung steht, einragt.

11. Verfahren zur Montage einer Sanitäranordnung nach einem der vorhergehenden Ansprüche, **dadurch gekennzeichnet,**
**dass** mindestens zwei Armaturenanschlüsse (2) derart in einer Öffnung (O) in einer Wand (W) platziert werden, dass der Anschlussfitting (3) durch die Wand hindurchragt und von der ersten Oberfläche (26) der Wand hervorsteht, und wobei die Befestigungsplatte zur zweiten Oberfläche der Wand gerichtet ist,
**dass** die mindestens zwei Armaturenanschlüsse (2) miteinander über die Kontaktabschnitt (9, 10, 11) verbunden und/oder kontaktiert werden,
**dass** ein Montagebolzen (32) mit dem mindestens einen Anschlussfitting (3) verbunden wird, so dass eine Kraft in Richtung der Mittelachse (M) vom Montagebolzen (32) auf den Anschlussfitting (3) übertragbar ist, wobei der Montagebolzen (32) von der Öffnung (O) her gesehen über die erste Oberfläche (26) der Wand (W) hervorsteht,
**dass** eine Montagehülse (34) mit dem Montagebolzen (32) verbunden wird, wobei über die Montagehülse (34) und den Montagebolzen (32) die Befestigungsplatte (6) in Richtung der zweiten Oberfläche (27) der Wand (W) bewegt wird,
**dass** die mindestens zwei miteinander verbundenen bzw. miteinander in Kontakt stehenden Armaturenanschlüsse (2) miteinander vor und/oder nach und/oder während der Betätigung der Montagehülse ausgerichtet werden, und
**dass** mindestens eine Schraube von der ersten Oberfläche (26) durch die Wand (W) in die Befestigungsplatte (6) gedreht wird, wobei durch diese Schraube der Armaturenanschluss (2) zur Wand (W) geklemmt wird.

12. Verfahren nach Anspruch 11, **dadurch gekennzeichnet, dass** die mindestens eine Schraube mit Hilfe einer Bohrlehre (36), welche mit dem Montagebolzen (32) in Kontakt steht, ausrichtbar ist.

## Claims

1. Sanitary arrangement (1) comprising at least two adjacently arranged fitting connections (2) for the installation of sanitary lines which lead through walls, wherein
the fitting connection (2) has a tubular connection fitting (3), with a side wall (5) bounding a through-passage (4), and a fastening plate (6), which has an outer contour (7) and a receiving opening (8), in which the connection fitting (3) is mounted in the fastening plate (6), wherein
the outer contour (7) comprises at least two contact portions (9, 10, 11), wherein the receiving opening (8) is arranged eccentrically in relation to these two contact portions (9, 10, 11), and therefore the distance (D1, D2, D3) between the connection fitting (3) and one contact portion (9) differs from the distance between the connection fitting (3) and another contact portion (10, 11) **characterized**
**in that** the at least two fitting connections (2) are in contact with one another via the contact portions (9, 10, 11), and therefore the centre-to-centre distance (A) of the connection fittings (3) can be adjusted by the fastening plates (6) being arranged in an alternative manner, and
**in that** the contact portions (9, 10, 11) are in the form of locking elements (19, 20), by means of which adjacent fastening plates (6) can be connected.

2. Sanitary arrangement according to Claim 1, **characterized in that** the contact portion (9, 10, 11) is in the form of side edges (17, 18), wherein the distance (D1) between the connection fitting (3) and one side edge (17) differs from the distance (D2) between the connection fitting (3) and another side edge (18).

3. Sanitary arrangement according to one of the preceding claims, **characterized in that** at least one of the contact portions (9, 10) is in the form of side edges (17, 18), and **in that** at least another of the contact portions (11) is in the form of a locking element, wherein the distance (D1) between the connection fitting (3) and the side edge (17, 18) differs from the distance (D3) between the connection fitting (3) and the locking element (19, 20).

4. Sanitary arrangement according to one of the preceding claims, **characterized in that** the contact portion (9, 10) in the form of the side edges (17, 18) has at least one latching-in element (21, 22).

5. Sanitary arrangement according to Claim 3 or 4, **characterized in that** the locking element (19, 20) has a stub (19) and an opening (20), wherein the stub (19) engages in the opening (20), and/or **in that** the latching-in element (21, 22) has a stub (21) and an opening (22), wherein the stub (21) engages in the opening (22).

6. Sanitary arrangement according to Claim 6, **characterized in that** the stub (19, 21) projects from the side edge (17, 18) in relation to the fastening plate (6), and **in that** the opening (20, 22) is arranged in the fastening plate (6).

7. Sanitary arrangement according to one of Claims 3 to 6, **characterized in that** the latching-in elements (21, 22) and/or the locking elements (19, 20) are arranged in coded form.

8. Sanitary arrangement according to one of the preceding claims, **characterized in that** the outer contour (7) has at least one recess (23) of concave form, and this therefore gives rise, between two adjacent fastening plates (6), to a common concave recess (24), by way of which a further fitting, for example an outlet bend of a siphon, can be guided through the sanitary arrangement (1).

9. Sanitary arrangement according to one of the preceding claims, **characterized in that** the connection fitting (3) is mounted in a rotationally fixed state in the fastening plate (6), wherein preferably the connection fitting (3) has a polygonal outer contour and the receiving opening (8) is in a form which corresponds to this polygonal outer contour.

10. Sanitary arrangement according to one of the preceding claims, **characterized in that** the connection fitting (3) is mounted in the fastening plate (6) such that it is fixed in relation to displacement along its centre axis (M), wherein the connection fitting (3) preferably has a niche (29), into which a retaining plate (30), connected to the fastening plate (6), projects.

11. Method of assembling a sanitary arrangement according to one of the preceding claims, **characterized in that** at least two fitting connections (2) are placed in an opening (O) in a wall (W) such that the connection fitting (3) protrudes through the wall and projects from the first surface (26) of the wall, and wherein the fastening plate is directed towards the second surface of the wall,
**in that** the at least two fitting connections (2) are connected to one another, and/or make contact with one another, via the contact portion (9, 10, 11),
**in that** an assembly bolt (32) is connected to the at least one connection fitting (3), and therefore it is possible to transmit a force, in the direction of the centre axis (M), from the assembly bolt (32) to the connection fitting (3), wherein the assembly bolt (32) projects beyond the first surface (26) of the wall (W), as seen from the opening (O),
**in that** an assembly sleeve (34) is connected to the assembly bolt (32), wherein the fastening plate (6) is moved in the direction of the second surface (27) of the wall (W) via the assembly sleeve (34) and the assembly bolt (32),
**in that** the at least two interconnected and/or in-contact fitting connections (2) are aligned with one another before and/or after and/or during actuation of the assembly sleeve, and
**in that** at least one screw is screwed through the wall (W), from the first surface (26), into the fastening plate (6), wherein this screw clamps the fitting connection (2) in relation to the wall (W).

12. Method according to Claim 11, **characterized in that** the at least one screw can be aligned with the aid of a gauge (36), which is in contact with the assembly bolt (32).

## Revendications

1. Système sanitaire (1) comprenant au moins deux raccordements de robinetterie (2) disposés l'un à côté de l'autre pour l'installation de conduites sanitaires traversant des parois,
le raccordement de robinetterie (2) présentant un raccord tubulaire (3) avec une paroi latérale (5) limitant un passage (4), et une plaque de fixation (6) qui présente un contour extérieur (7) et une ouverture de réception (8) dans laquelle le raccord (3) est monté dans la plaque de fixation (6),
le contour extérieur (7) comprenant au moins deux portions de contact (9, 10, 11), l'ouverture de réception (8) étant disposée de manière excentrée par rapport à ces deux portions de contact (9, 10, 11), de telle sorte que la distance (D1, D2, D3) du raccord (3) à une portion de contact (9) soit différente de la distance du raccord (3) à une autre portion de contact (10, 11), **caractérisé en ce que**
les au moins deux raccordements de robinetterie (2) sont en contact l'un avec l'autre par le biais des portions de contact (9, 10, 11) de telle sorte que la distance axiale (A) des raccords (3) puisse être ajustée par une disposition différente des plaques de fixation (6), et
les portions de contact (9, 10, 11) présentent la forme d'éléments de verrouillage (19, 20) avec lesquels des plaques de fixation (6) disposées l'une à côté de l'autre peuvent être connectées.

2. Système sanitaire selon la revendication 1, **caractérisé en ce que** la portion de contact (9, 10, 11) présente la forme de bords latéraux (17, 18), la distance (D1) du raccord (3) à un bord latéral (17) étant différente de la distance (D2) du raccord (3) à un autre bord latéral (18).

3. Système sanitaire selon l'une quelconque des revendications précédentes, **caractérisé en ce qu'**au moins l'une des portions de contact (9, 10) présente la forme de bords latéraux (17, 18) et **en ce qu'**au moins une autre des portions de contact (11) présente la forme d'un élément de verrouillage, la distance (D1) du raccord (3) au bord latéral (17, 18) étant différente de la distance (D3) du raccord (3) à l'élément de verrouillage (19, 20).

4. Système sanitaire selon l'une quelconque des revendications précédentes, **caractérisé en ce que** la portion de contact (9, 10) sous la forme des bords latéraux (17, 18) dispose d'au moins un élément d'encliquetage (21, 22).

5. Système sanitaire selon la revendication 3 ou 4, **caractérisé en ce que** l'élément de verrouillage (19, 20) dispose d'un tourillon (19) et d'une ouverture (20), le tourillon (19) venant en prise dans l'ouverture (20) et/ou **en ce que** l'élément d'encliquetage (21, 22) dispose d'un tourillon (21) et d'une ouverture (22), le tourillon (21) venant en prise dans l'ouverture (22).

6. Système sanitaire selon la revendication 6, **caractérisé en ce que** le tourillon (19, 21) fait saillie depuis le bord latéral (17, 18) par rapport à la plaque de fixation (6), et **en ce que** l'ouverture (20, 22) est disposée dans la plaque de fixation (6).

7. Système sanitaire selon l'une quelconque des revendications 3 à 6, **caractérisé en ce que** les éléments d'encliquetage (21, 22) et/ou les éléments de verrouillage (19, 20) sont disposés de manière codée.

8. Système sanitaire selon l'une quelconque des revendications précédentes, **caractérisé en ce que** le contour extérieur (7) présente au moins un évidement (23) de forme concave, de telle sorte qu'entre deux plaques de fixation adjacentes (6) soit formé un évidement concave commun (24) à travers lequel une robinetterie supplémentaire, par exemple un coude de sortie d'un siphon, peut être guidée à travers le système sanitaire (1).

9. Système sanitaire selon l'une quelconque des revendications précédentes, **caractérisé en ce que** le raccord (3) est monté de manière solidaire en rotation dans la plaque de fixation (6), le raccord (3) présentant de préférence un contour extérieur polygonal et l'ouverture de réception (8) présentant une forme correspondant à ce contour extérieur polygonal.

10. Système sanitaire selon l'une quelconque des revendications précédentes, **caractérisé en ce que** le raccord (3) est supporté fixement dans la plaque de fixation (6) par rapport à un déplacement le long de son axe médian (M), le raccord (3) présentant de préférence une entaille (29) dans laquelle pénètre une plaque de retenue (30) qui est en liaison avec la plaque de fixation (6).

11. Procédé de montage d'un système sanitaire selon l'une quelconque des revendications précédentes,
**caractérisé en ce**
**qu'**au moins deux raccordements de robinetterie (2) sont placés dans une ouverture (O) d'une paroi (W) de telle sorte que le raccord (3) traverse la paroi et fasse saillie hors de la première surface (26) de la paroi, la plaque de fixation étant orientée vers la deuxième surface de la paroi,
**que** les au moins deux raccordements de robinetterie (2) sont connectés et/ou mis en contact l'un avec l'autre par le biais de la portion de contact (9, 10, 11),
**qu'**un boulon de montage (32) est connecté à l'au moins un raccord (3), de telle sorte qu'une force puisse être transmise dans la direction de l'axe médian (M) depuis le boulon de montage (32) jusqu'au raccord (3), le boulon de montage (32), vu depuis l'ouverture (O), faisant saillie au-delà de la première surface (26) de la paroi (W), qu'une douille de montage (34) est connectée au boulon de montage (32), la plaque de fixation (6) étant déplacée dans la direction de la deuxième surface (27) de la paroi (W) par le biais de la douille de montage (34) et du boulon de montage (32),
**que** les au moins deux raccordements de robinetterie (2) connectés ou en contact l'un avec l'autre sont alignés l'un avec l'autre avant et/ou après et/ou pendant l'actionnement de la douille de montage, et
**qu'**au moins une vis est vissée depuis la première surface (26) à travers la paroi (W) dans la plaque de fixation (6), le raccordement de robinetterie (2) étant serré par rapport à la paroi (W) à l'aide de cette vis.

12. Procédé selon la revendication 11, **caractérisé en ce que** l'au moins une vis peut être alignée à l'aide d'un gabarit de perçage (36), qui est en contact avec le boulon de montage (32).
